# EUROPÄISCHE PATENTSCHRIFT

(11) **EP 2 121 202 B1**
(45) Veröffentlichungstag und Bekanntmachung des Hinweises auf die Patenterteilung: **22.03.2017**
(21) Anmeldenummer: 07847351.9
(22) Anmeldetag: 26.11.2007
(51) Int. Cl.: B05D 7/16, C08K 5/12, C09D 127/06, C09D 5/08

(54) **VERWENDUNG VON CYCLOHEXANPOLYCARBONSÄUREESTERN FÜR DIE HERSTELLUNG VON BESCHICHTUNGSSTOFFEN FÜR DAS COIL-COATING-VERFAHREN UND VON BESCHICHTETEN COILS**
UTILISATION OF CYCLOHEXANEPOLYCARBOXYLIC ACID ESTERS FOR MANUFACTURING COATINGS FOR THE COIL COATING PROCESS AND COATED COILS
UTILISATION D'ESTERS D'ACIDES DE CYCLOHEXANE POLYCARBOXYLIQUES POUR LA FABRICATION DE MATÉRIAUX DE REVÊTEMENT POUR LE PROCÉDÉ DE REVÊTEMENT DE BOBINES ET DE BOBINES REVÊTUES

(30) Priorität: 19.12.2006 EP 06126530
(43) Veröffentlichungstag der Anmeldung: 25.11.2009
(73) Patentinhaber: BASF SE, 67056 Ludwigshafen am Rhein (DE)
(72) Erfinder: DAVIES, Paul Michael, Great Sutton South Wirral CH 66 2HX (GB); COOMBS, Deborah Lois, Gwersylt, Wrexham LL11 4SB (GB); STENGEL, Ulrik, Puxi, Shanghai 201702 (CN); MORGAN, Christopher David, Macclesfield, Cheshire SK10 (GB)
(86) Internationale Anmeldenummer: PCT/EP2007/062819
(87) Internationale Veröffentlichungsnummer: WO 2008/074594

(56) Entgegenhaltungen:
- WO-A-99/32427
- WO-A-2004/022606
- WO-A-2004/081127
- WO-A1-03/029339
- WO-A2-2004/065470
- DE-U1- 20 021 356
- US-A1- 4 208 488
- "Neues Extender PVC für Plastisole", FETTE SEIFEN ANSTRICHMITTEL, vol. 85, no. 1, 1 January 1983 (1983-01-01), page 45, DOI: 10.1002/lipi.19830850108

## Beschreibung

### Gebiet der Erfindung

Die vorliegende Erfindung betrifft die neue Verwendung von 1,2-Cyclohexandicarbonsäurediisononylester für ein Coil-Coating-Verfahren wobei man einen fließfähigen Beschichtungsstoff, kontinuierlich einseitig oder zweiseitig auf ein Coil appliziert und die applizierten Schicht(en) thermisch nachbehandelt, dadurch gekennzeichnet, dass ein Beschichtungsstoff, enthaltend 1,2-Cyclohexandicarbonsäurediisononylester, ein Pasten-PVC und ein Extender-PVC eingesetzt wird.

### Stand der Technik

Unter Bandbeschichtung oder Coil-Coating versteht man eine Spezialform der Walzlackierung (Römpp Lexikon Lacke und Druckfarben, Georg Thieme Verlag, Stuttgart, New York, 1998, Seite 617, "Walzlackierung") sowie vereinzelt der Spritz- und Gießlackierung von Metallbändern mit flüssigen Lacken. Es handelt sich um ein kontinuierlich arbeitendes Verfahren, d.h. alle Arbeitsabläufe wie Reinigung, Vorbehandlung, Beschichtung und Härtung usw. werden in einem Arbeitsgang in einer Anlage durchgeführt. Die Bandbeschichtung umfasst schematisch die folgenden Schritte: Nach Reinigung und Entfettung des Bandes erfolgt eine mehrstufige chemische Vorbehandlung mit anschließender Passivierung, Spülung und Trocknung. Nach dem Abkühlen erfolgt die einseitige oder zweiseitige Applikation des flüssigen Beschichtungsstoffs mit zwei oder drei Walzen, meist nach dem Reverse-Roller-Coating-Verfahren. Gegebenenfalls nach einer sehr kurzen Abdunstzeit erfolgt die thermische Nachbehandlung, insbesondere die thermische Härtung oder Gelierung, der applizierten Schicht bei höheren Temperaturen, beispielsweise bei 140 bis 260°C, während einer kurzen Zeit, beispielsweise während 10 bis 60 s. Bei der Herstellung einer Mehrschichtlackierung werden Applikation sowie gegebenenfalls die thermische Nachbehandlung oder die thermische Härtung oder Gelierung wiederholt. Die Geschwindigkeiten von Bandbeschichtungsanlagen können bis zu 250 m/min betragen (Römpp Lexikon Lacke und Druckfarben, Georg Thieme Verlag, Stuttgart, New York, 1998, Seite 55, "Bandbeschichtung").

Die Verwendung von Benzolpolycarbonsäureestern, insbesondere Phthalsäurealkylestern, zur Herstellung von Beschichtungsstoffen auf der Basis von PVC, die für das Coil-Coating-Verfahren eingesetzt werden, ist bekannt. Die Benzolpolycarbonsäureester werden dabei als Weichmacher für das PVC eingesetzt. Bei den bekannten Coil-Coating-Verfahren sollen die Bandgeschwindigkeiten mindestens 100 m/min betragen.

Hier und im Folgenden werden unter Polyvinylchloriden oder PVC Homopolymerisate und Copolymerisate von Vinylchlorid verstanden (vgl. beispielsweise die internationale Patentanmeldung WO 03/29339 A1, Seite 16, Zeile 6, bis Seite 17, Zeile 27, das deutsche Gebrauchsmuster DE 200 21 356 U1, Seite 44, Zeilen 4 bis 15, oder Römpp Online 2006, »Polyvinylchloride«). Im Allgemeinen besteht der PVC-Anteil der bekannten Beschichtungsstoffe aus Pasten-PVC und Pastenverschnittharz oder Extender-PVC. Der Unterschied zwischen einem Pasten-PVC und einem Extender-PVC lässt sich am besten über die jeweilige Korngrößenverteilung erklären. Während der mittlere Korndurchmesser für Pasten-PVC i. d. R. im Bereich von 1 bis 15 µm liegt, weisen Extender-PVC typische Werte von 25 bis 35 µm auf. Die Kornstruktur eines Extender-PVC sollte möglichst rund sein und - im Gegensatz zu typischen Suspensionspolymerisaten für die thermoplastische Verarbeitung - eine sehr geringe Porosität besitzen (vgl. die Firmenschrift der Vinnolit GmbH & Co. KG, Carl-Zeiss-Ring 25, D-85737 Ismaning, »Vinnolit Leadership in PVC«, November 2006).

Cyclohexanpolycarbonsäureester und Verfahren zu ihrer Herstellung sind beispielsweise aus den internationalen Patentanmeldungen WO 99/32427, WO 02/066412 A1, WO 03/029339 A1 oder WO 2005/123821 A2, dem deutschen Gebrauchsmuster DE 200 21 356 U1 oder der deutschen Patentanmeldung DE 101 16 812 A1 bekannt.

Die bekannten Cyclohexanpolycarbonsäureester können in vielfältiger Weise verwendet werden.

So ist ihre Verwendung als Weichmacher für PVC aus der internationalen Patentanmeldung WO 99/32427 bekannt. Nach Seite 23, Zeile 5 bis 15, der WO 99/32427 besitzen die Cyclohexanpolycarbonsäureester verglichen mit den bislang hauptsächlich als Weichmacher verwendeten Phthalaten eine niedrigere Dichte und Viskosität und führen unter anderem zu einer Verbesserung der Kälteflexibilität des Kunststoffs gegenüber der Verwendung der entsprechenden Phthalate als Weichmacher, wobei Eigenschaften wie Shore A-Härte und mechanische Eigenschaften die resultierenden Kunststoffe identisch zu denen sind, die bei der Verwendung von Phthalaten resultieren. Außerdem besitzen die Cyclohexanpolycarbonsäureester ein besseres Verarbeitungsverhalten im Dry-Blend und als Folge eine erhöhte Produktionsgeschwindigkeit sowie in Plastisol-Verarbeitungen Vorteile durch eine deutlich niedrigere Viskosität gegenüber den entsprechenden Phthalaten.

Dieselbe Verwendung geht aus dem deutschen Gebrauchsmuster DE 200 21 356 U1 hervor. Nach Seite 48, Zeile 24, bis Seite 49, Zeile 9, der DE 200 21 356 U1 zeichnen sich die Weichmacher durch eine niedrige Dichte und Viskosität aus, was zu günstigeren Volumenkosten der betreffenden Weich-PVC-Artikel führt. Die niedrige Viskosität verbessert außerdem die Verarbeitbarkeit in Plastisol-Verfahren. Außerdem weisen die Weichmacher eine geringe Flüchtigkeit auf. Die betreffenden Weich-PVC-Artikel zeichnen sich vor allem durch sehr gute kälteelastische Eigenschaften aus, d. h. durch niedrige Kältebruchtemperatur (Bestimmung nach DIN 53372) und eine niedrige Torsionssteifheit (Bestimmung nach DIN 53447). Darüber hinaus resultiert eine verbesserte Thermostabilität der Weich-PVC-Artikel, gekennzeichnet durch eine höhere Wärmeschrankstabilität (Bestimmung nach DIN 53381, Teil 2, Verfahren E) und eine höhere HCI-Reststabilität (Bestimmung nach VDE-Norm 0472, § 614). Die betreffenden Weich-PVC-Artikel können beispielsweise in Gehäusen für Elektrogeräte, Rohrleitungen, Apparaten, Kabeln, Draht-Ummantelungen, Fensterprofilen, im Innenausbau, im Fahrzeug- und Möbelbau, im Bodenbelägen, medizinischen Artikeln, Lebensmittelverpackungen, Dichtungen, Folien, Verbundfolien, Schallplatten, Kunstleder, Spielzeug, Verpackungsbehältern, Klebebandfolien, Bekleidung, Beschichtungen oder in Fasern für Gewebe verwendet werden. Dies geht auch aus der internationalen Patentanmeldung WO 02/066412, insbesondere Seite 25, Zeile 7, bis Seite 26, Zeile 13, oder der deutschen Patentanmeldung DE 101 16 812 A1, insbesondere Seite 16, Absätze [0058] bis [0064], hervor.

Nach der internationalen Patentanmeldung WO 03/029339 A1 können die mit Cyclohexanpolycarbonsäureestern weich gemachten PVC-Materialien für die Herstellung von Röhren, Draht- und Kabelbeschichtungen, Bodenbelägen, Jalousien, Filmen, Planen, Blutbeutel, medizinischen Schläuchen, Verschalungen, Polsterungen, Gartenschläuchen, Schwimmbadisolierungen, Wasserbetten, Kleiderbeschichtungen, Spielzeugen oder Schuhsohlen dienen. Da die Cyclohexanpolycarbonsäureester zu einer verbesserten UV-Beständigkeit führen, kommen die betreffenden weich gemachten PVC-Materialien insbesondere für Außenanwendungen in Betracht, wie beispielsweise Bedachungen, Planen und Zelte, Filme wie Klebebänder und landwirtschaftliche Folien, Schuhe, Automobilinnenausstattungen oder Unterbodenschutz für Automobilkarosserien. Die bekannten weich gemachten PVC-Materialien können durch Extrusion, Spritzgießen oder Kalandrieren verarbeitet werden. Dabei führen die bekannten Cyclohexanpolycarbonsäureester zu einer Erniedrigung der Viskosität (vgl. insbesondere Seite 2, Zeile 32, bis Seite 8, Zeile 33, und Ansprüche 15 bis 18 von WO 03/029339 A1).

Darüber hinaus ist es aus der internationalen Patentanmeldung WO 2005/123821 A2 bekannt, 1,2-Cyclohexandicarbonsäurediester in Hilfsmitteln oder als Hilfsmittel, wie
- oberflächenaktive Zusammensetzungen, wie Fließ- und Filmbildehilfsmittel, Entschäumer, Schaumverhüter, Benetzungsmittel, Koaleszenzmittel und Emulgatoren;
- Schmierstoffe;
- Kalandrierhilfsmittel;
- Rheologiehilfsmittel;
- Quencher für chemische Reaktionen;
- Phlegmatisierungsmittel;
- pharmazeutische Produkte;
- Weichmacher in Klebstoffen;
- Schlagzähmodifier und
- Stellmittel;
zu verwenden (vgl. dazu im einzelnen Seite 15, Zeile 13, bis Seite 24, Zeile 9, von WO 2005/123821 A2).

Die Verwendung von Cyclohexanpolycarbonsäureestern für die Herstellung von Beschichtungsstoffen für das Coil-Coatings-Verfahren und von beschichteten Coils ist an sich bekannt.

So gehen aus dem amerikanischen Patent US 4,208,488 Beschichtungsstoffe für das Coil-Coating-Verfahren hervor, die Homo- und/oder Copolymerisate von Vinylmonomeren mit bis zu 2 Fluoratomen (beispielsweise Fluorethylen oder 1,1-Difluorethylen) enthalten.

Aus der internationalen Patentanmeldung WO 2004/022606 A1 sind Beschichtungsstoffe für das Coil-Coating-Verfahren bekannt, die PVC und Vinylchlorid- Copolymerisate ganz allgemein enthalten. Mischungen von Pasten-PVC und Extender-PVC werden nicht erwähnt.

In der WO 2004/06547 A2 wird stabilisiertes PVC beschrieben, das auch in Coil-Coating-Verfahren eingesetzt werden könnte und u. a. als Weichmacher DINCH enthalten kann. Aus dieser Schrift geht jedoch nicht die Verwendung eines bimodalen PVC's in einer bestimmten Teilchengröße in einem Coil-Coating-Verfahren hervor.

Aus der internationalen Patentanmeldung WO 2004/081127 A1 sind lediglich Druckfarben für Metallfolien bekannt. Die Druckfarben enthalten ganz allgemein PVC-Copolymerisate. Mischungen von Pasten-PVC und Extender-PVC werden dagegen nicht erwähnt.

### Aufgabe

Der vorliegenden Erfindung lag die Aufgabe zugrunde, eine neue Verwendung für Cyclohexanpolycarbonsäureester zu finden.

Insbesondere lag der vorliegenden Erfindung die Aufgabe zugrunde, die Bandgeschwindigkeiten bei Coil-Coating-Verfahren, bei denen Beschichtungsstoffe auf der Basis von weich gemachtem PVC kontinuierlich auf Bänder, insbesondere Metallbänder, appliziert werden, wonach die applizierten Schichten thermisch gehärtet oder geliert werden, signifikant zu erhöhen, um so die Wirtschaftlichkeit der Coil-Coating-Verfahren weiter zu verbessern.

Nicht zuletzt lag der vorliegenden Erfindung die Aufgabe zugrunde, beschichtete Coils bereitzustellen, die nach dem Coil-Coating-Verfahren hergestellt werden und deren Beschichtungen in ihren mechanischen, chemischen und physikalischen Eigenschaften, insbesondere in ihren kälteelastischen Eigenschaften, ihrer Thermostabilität und ihrer Haftung zu den Coils bzw. zu den hierauf befindlichen Grundierungen oder Primer-Beschichtungen, den unter Verwendung von Phthalsäurediestern hergestellten Beschichtungen zumindest gleichen, wenn nicht gar diese übertreffen. Dabei sollen die beschichteten Coils, bzw. deren Beschichtungen eine bessere Witterungsbeständigkeit, insbesondere UV-Beständigkeit, aufweisen als die unter Verwendung von Phthalsäurediestern hergestellten beschichteten Coils bzw. deren Beschichtungen.

Darüber hinaus sollen sich die beschichteten Coils leicht verarbeiten, insbesondere auch bei tiefen Temperaturen leicht verformen lassen, ohne dass Rissen oder Delamination auftreten, so dass die Herstellung besonders stark geformter und komplex strukturierter dreidimensionaler Formteile möglich ist.

Die betreffenden dreidimensionalen Formteile sollen sich hervorragend für vielfältige Verwendungen im Innen- und Außenbereich eignen, wie beispielsweise im Automobilbau für die Herstellung von Karosserieteilen und Karosserien, Nutzfahrzeugaufbauten und Verkleidungen von Caravans; im Hausgerätebereich, beispielsweise für die Herstellung von Waschmaschinen, Geschirrspülmaschinen, Trocknern, Kühlschränken, Gefrierschränken oder Herden; im Leuchtenbereich für die Herstellung von Leuchten für den Innen- und Außenbereich oder im Baubereich im Innen- und Außenbereich, beispielsweise für die Herstellung von Decken- und Wandelementen, Türen, Toren Rohrisolierungen, Rollläden oder Fensterprofilen.

### Erfindungsgemäße Lösung

Demgemäß wurde die neue Verwendung von 1,2-Cyclohexandicarbonsäurediisononylester in einem Coil-Coatings-Verfahren gefunden, bei dem man einen fließfähigen Beschichtungsstoff, kontinuierlich einseitig oder zweiseitig auf ein Coil appliziert und die applizierten Schicht(en) thermisch nachbehandelt, dadurch gekennzeichnet, dass ein Beschichtungsstoff, enthaltend 1,2-Cyclohexandicarbonsäurediisononylester, ein Pasten-PVC eines mittleren Korndurchmessers von 1 bis 15 µm und ein Extender-PVC eines mittleren Korndurchmessers von 25 bis 35 µm und mindestens ein Additiv, ausgewählt aus der Gruppe, bestehend aus Stabilisatoren, Gleitmitteln, Füllstoffen, Pigmenten, Flamminhibitoren, Lichtstabilisatoren, Treibmitteln, polymeren Verarbeitungshilfsmitteln, Schlagzähverbesserern, optischen Aufhellern, Antistatika, Biostabilisatoren und von PVC verschiedenen Kunststoffen verwendet wird, die im Folgenden als »erfindungsgemäße Verwendung« bezeichnet wird.

Außerdem wurde das neue Coil-Coating-Verfahren gefunden, bei dem man einen fließfähigen Beschichtungsstoff, kontinuierlich einseitig oder zweiseitig auf ein Coil appliziert und die applizierten Schicht(en) thermisch nachbehandelt, dadurch gekennzeichnet, dass ein Beschichtungsstoff, enthaltend 1,2-Cyclohexandicarbonsäurediisononylester, ein Pasten-PVC eines mittleren Korndurchmessers von 1 bis 15 µm und ein Extender-PVC eines mittleren Korndurchmessers von 25 bis 35 µm und mindestens ein Additiv, ausgewählt aus der Gruppe, bestehend aus Stabilisatoren, Gleitmitteln, Füllstoffen, Pigmenten, Flamminhibitoren, Lichtstabilisatoren, Treibmitteln, polymeren Verarbeitungshilfsmitteln, Schlagzähverbesserern, optischen Aufhellern, Antistatika, Biostabilisatoren und von PVC verschiedenen Kunststoffen verwendet wird und das im Folgenden als »erfindungsgemäßes Verfahren« bezeichnet wird.

Des Weiteren werden beschichtete Coils beschrieben , die mit Hilfe des erfindungsgemäßen Verfahrens herstellbar sind und die im Folgenden als hier beschriebene oder offenbarte Coils bezeichnet werden.

Nicht zuletzt werden Formteile beschrieben , die aus den hier offenbarten Coils hergestellt werden und die im Folgenden als hier beschriebene oder offenbarte Formteile bezeichnet werden.

### Vorteile der Erfindung

Im Hinblick auf den Stand der Technik war es überraschend und für den Fachmann nicht vorhersehbar, dass die Aufgabe, die der vorliegenden Erfindung zugrunde lag, mit Hilfe der erfindungsgemäßen Verwendung, des erfindungsgemäßen Verfahrens, der hier beschriebenen Coils und Formteile gelöst werden konnte.

Insbesondere war es überraschend, dass aufgrund der erfindungsgemäßen Verwendung die Bandgeschwindigkeiten bei dem erfindungsgemäßen Verfahren gegenüber den Bandgeschwindigkeiten bei Coil-Coating-Verfahren des Standes der Technik signifikant erhöht werden konnten, so dass die Wirtschaftlichkeit des erfindungsgemäßen Verfahrens diejenige der Coil-Coating-Verfahren des Standes der Technik übertraf.

Nicht zuletzt glichen die hier offenbarten Coils und die hierauf befindlichen Beschichtungen in ihren mechanischen, chemischen und physikalischen Eigenschaften, insbesondere in ihren kälteelastischen Eigenschaften, ihrer Thermostabilität und ihrer Haftung zu den Coils bzw. zu den hierauf befindlichen Grundierungen oder Primer-Beschichtungen, zumindest den unter Verwendung von Phthalsäurediestern hergestellten Beschichtungen und Coils, wenn sie letztere nicht sogar übertrafen. Dabei wiesen die hier offenbarten Coils, bzw. deren Beschichtungen eine bessere Witterungsbeständigkeit, insbesondere UV-Beständigkeit, auf als die unter Verwendung von Phthalsäurediestern hergestellten beschichteten Coils bzw. deren Beschichtungen.

Darüber hinaus ließen sich die hier beschriebenen Coils besonders leicht verarbeiten, insbesondere auch bei tiefen Temperaturen leicht verformen, ohne dass Rissen oder Delamination auftraten, so dass die Herstellung besonders stark geformter und komplex strukturierter dreidimensionaler Formteile möglich war.

Die betreffenden dreidimensionalen Formteile eigneten sich hervorragend für vielfältige Verwendungen im Innen- und Außenbereich, wie beispielsweise im Automobilbau für die Herstellung von Karosserieteilen und Karosserien, Nutzfahrzeugaufbauten und Verkleidungen von Caravans; im Hausgerätebereich, beispielsweise für die Herstellung von Waschmaschinen, Geschirrspülmaschinen, Trocknern, Kühlschränken, Gefrierschränken oder Herden; im Leuchtenbereich für die Herstellung von Leuchten für den Innen- und Außenbereich oder im Baubereich im Innen- und Außenbereich, beispielsweise für die Herstellung von Decken- und Wandelementen, Türen, Toren Rohrisolierungen, Rollläden oder Fensterprofilen.

### Ausführliche Beschreibung der Erfindung

Die vorliegende Erfindung betrifft ein Coil-Coating-Verfahren, bei dem man einen fließfähigen Beschichtungsstoff, kontinuierlich einseitig oder zweiseitig auf ein Coil appliziert und die applizierten Schicht(en) thermisch nachbehandelt, dadurch gekennzeichnet, dass ein Beschichtungsstoff, enthaltend 1,2-Cyclohexandicarbonsäurediisononylester, ein Pasten-PVC eines mittleren Korndurchmessers von 1 bis 15 µm und ein Extender-PVC eines mittleren Korndurchmessers von 25 bis 35 µm und mindestens ein Additiv, ausgewählt aus der Gruppe, bestehend aus Stabilisatoren, Gleitmitteln, Füllstoffen, Pigmenten, Flamminhibitoren, Lichtstabilisatoren, Treibmitteln, polymeren Verarbeitungshilfsmitteln, Schlagzähverbesserern, optischen Aufhellern, Antistatika, Biostabilisatoren und von PVC verschiedenen Kunststoffen verwendet wird.

Die Beschichtungsstoffe für das erfindungsgemäße Verfahren sind fließfähig. D. h., sie können bei ihrer Verarbeitungstemperatur, insbesondere bei 0 bis 150°C, in der Form feiner fließfähiger Pulver oder von Flüssigkeiten oder Schmelzen vorliegen. Bei den Flüssigkeiten oder Schmelzen kann es sich um homogene oder heterogene Materialien wie Dispersionen handeln. Vorzugsweise sind die Beschichtungsstoffe bei Raumtemperatur flüssige Dispersionen.

Die erfindungsgemäß zu verwendenden Beschichtungsstoffe können der Herstellung von Grundierungen oder Primer-Beschichtungen, Rückseitenlackierungen oder Decklackierungen dienen. Vorzugsweise dienen sie der Herstellung von Decklackierungen.

Bei dem erfindungsgemäßen Verfahren werden die Beschichtungsstoffe kontinuierlich einseitig oder zweiseitig auf Coils appliziert. Die Methoden der Applikation richten sich nach dem Aggregatzustand der Beschichtungsstoffe. So werden pulverförmige Beschichtungsstoffe üblicherweise durch gegebenenfalls elektrostatisch unterstützte Pulversprühverfahren appliziert. Flüssige oder geschmolzene Beschichtungsstoffe werden üblicherweise durch Vorhanggießen oder Walzauftrag, insbesondere Walzauftrag, appliziert.

Bei den Coils handelt es sich um Bänder aus Metallen. Insbesondere werden Coils aus Stahl, verzinktem Stahl und Aluminium verwendet. Die maximale Bandbreite der Metall-Coils liegt im Allgemeinen bei 2000 mm. Die Dicke der Metall-Coils beträgt im Allgemeinen 0,2 bis 2 mm.

Vor der Applikation der Beschichtungsstoffe werden die Coils gereinigt und entfettet. Anschließend erfolgt eine mehrstufige chemische Vorbehandlung mit anschließender Spülung, Passivierung und Trocknung. Nachdem Abkühlen erfolgt das ein- oder zweiseitige Aufbringen des vorzugsweise flüssigen Beschichtungsstoffs. Bei der bevorzugten Verwendung des Beschichtungsstoffs zur Herstellung einer Decklackierung werden die Coils zuvor mit einer Grundierung oder Primer-Beschichtung sowie gegebenenfalls mit einer Rückseitenlackierungen versehen.

Nach ihrer Applikation werden die applizierten Beschichtungen gegebenenfalls nach einer sehr kurzen Ablüftungszeit, vorzugsweise 3 bis 10 s, thermisch nachbehandelt. Dabei werden maximale Metalltemperaturen (peak metal temperaures; PMT) von 140 bis 260°C erreicht. Die Dauer der thermischen Nachbehandlung liegt im Allgemeinen bei 20 bis 120 s. Durch die thermische Nachbehandlung wird eine thermische Härtung oder Gelierung der Beschichtung erzielt. Die Bandgeschwindigkeiten erreichen bis zu 200 m/min.

Der Aufbau der Beschichtung der resultierenden erfindungsgemäßen Coils kann breit variieren. Vorzugsweise besteht die Beschichtung aus einer Rückseitenlackierung sowie einer Grundierung oder Primer-Beschichtung, die sich auf der der Rückseite gegenüber liegenden Seite befindet, und einer auf der Grundierung befindlichen Decklackierung. Vorzugsweise haben die Grundierungen eine Schichtdicke von 5 bis 8 µm. Vorzugsweise haben die Decklackierungen eine Schichtdicke von 50 bis 350 µm, insbesondere 100 bis 300 µm. Vorzugsweise haben die Rückseitenlackierungen eine Schichtdicke von 8 bis 10 µm.

Die Decklackierungen der hier offenbarten Coils können mit Prägungen der Oberfläche versehen werden. Es können Laminate aufgetragen werden. Nicht zuletzt können abziehbare Schutzfolien aufgelegt werden, die die Coils bei der Lagerung, dem Transport und der Montage schützen. Die Coils werden zu Rollen gewickelt und in dieser Form gelagert und transportiert.

Zur Herstellung der hier offenbarten Formteile werden die Rollen wieder aufgewickelt, und die erfindungsgemäßen Coils werden zu Platten der erforderlichen Abmessungen zugeschnitten. Die Platten werden dann in geeigneter Weise, insbesondere durch Stanzen, Umformen, Profilieren, Abkanten und Tiefziehen, zu den gewünschten Formteilen geformt.

Zur weiteren Einzelheiten betreffend das Coil-Coating-Verfahren wird auf A. Goldschmidt und H.-J. Streitberger, BASF-Handbuch Lackiertechnik, Vincentz Verlag, Hannover, 2002, »7.4 Coil Coating«, Seiten 751 bis 756, sowie Römpp Online 2006, »Bandbeschichtung«, verwiesen.

Die erfindungsgemäß zu verwendenden Cyclohexanpolycarbonsäureester sind 1,2-Cyclohexandicarbonsäurediester. Substituenten sind Isononylreste. Insbesondere leiten sich die Isononylreste, von Isononanolen mit einem Isoindex, berechnet aus dem Verzweigungsgrad der im Isononanol enthaltenen C9-Alkoholen und ihrer jeweiligen gaschromatographisch gemessenen Menge, von vorzugsweise 0,1 bis 4, bevorzugt 0,5 bis 3, besonders bevorzugt 0,8 bis 2 und insbesondere 1 bis 1,5, ab. Zu den Einzelheiten wird auf die internationale Patentanmeldung WO 2005/123821 A2, Seite 10, Zeile 15, bis Seite 14, Zeile 10, verwiesen.

Die zur Herstellung solcher Cyclohexandicarbonsäurediisononylester benötigten Isononanole können außerdem vorteilhaft durch die Dimerisierung von Butenen, wie 1-Buten, 2-Buten und/oder Isobuten, vorzugsweise 1-Buten und/oder 2-Buten oder Butengemischen, wie sie in Raffinat II-Strömen vorliegen können, anschließende Hydroformylierung der enthaltenen Octengemische mittels unmodifizierten oder mit phosphorhaltigen Liganden modifizierten, homogenen Kobalt- oder Rhodiumcarbonylkomplexkatalysatoren und nachfolgende Hydrierung des dabei erhaltenen Gemisches aus isomeren Nonanalen zum Isononanol-Gemisch erhalten werden. Unter Raffinat II werden C₄-Kohlenwasserstoffströme aus Crackern, beispielsweise Steamcrackern, verstanden, aus denen darin enthaltendes Butadien durch Extraktion oder Partialhydrierung vollständig oder weitgehend entfernt oder zu Buten umgewandelt wurde und in einem Folgeschritt darin enthaltendes Isobuten weitgehend extrahiert wurde. Dementsprechend enthält Raffinat II als Hauptkomponenten 1- und 2-Buten sowie Butane neben wenig Isobuten.

Die Dimerisierung der Butene kann nach bekannten Verfahren mittels homogener (IFP-Prozess) oder heterogener Nickel-haltiger Katalysatoren oder durch Katalyse mittels gasförmiger, flüssiger oder fester Brönstedsäuren bewerkstelligt werden. Neben Gemischen isomerer Oktene entstehen bei der Butendimerisierung Gemische isomerer Dodecene und Hexadecene, letztere können analog dem für Isononanole beschriebenen Weg zu den entsprechenden Tridecanolen bzw. Heptadecanolen weiterverarbeitet werden, die ebenfalls zur Herstellung erfindungsgemäß einsetzbarer Cyclohexandicarbonsäurediester verwendet werden können.

Heterogene Nickelkatalysatoren und Verfahren für die Di- bzw. Oligomerisierung von Butenen werden beispielsweise in der internationalen Patentanmeldung WO 95/14647, den europäischen Patentanmeldungen EP 272 970 A1 und EP 1 244 518 A1 und von Nierlich et al. in Hydrocarbon Processing, Februar-Ausgabe 1986, Seite 31, beschrieben.

Die Hydroformylierung der Oktengemische zu isomeren Nonanolen mittels unmodifizierter oder modifizierter, homogener Kobalt- oder Rhodiumcarbonylkomplexkatalysatoren kann auf bekannte Weise, beispielsweise wie in den europäischen Patentanmeldungen EP 1 204 624 A1, EP 1 171 413 A1 und EP 835 234 A1, der internationalen Patentanmeldung WO 93/23566, und dem amerikanischen Patent US 7 138 552 beschrieben, durchgeführt werden. In analoger Weise können Tridecanol- bzw. Heptadecanolgemische aus den betreffenden Oligomerisierungsnebenprodukten der Butendimerisierung, also Dodecenen bzw. Hexadecenen, hergestellt werden.

Eine alternative vorteilhafte Olefinquelle zur Herstellung solcher Nonanolgemische über den Weg der Hydroformylierung und Hydrierung stellen Fischer-Tropsch-Olefine dar.

Demgemäß handelt es sich bei den Cyclohexanpolycarbonsäureestern, die erfindungsgemäß verwendet werden, um 1,2-Cyclohexandicarbonsäurediisononylester. Diese sind handelsübliche Produkte, die beispielsweise von der Firma BASF Aktiengesellschaft unter der Marke Hexamoll® DINCH vertrieben werden.

Bei ihrer erfindungsgemäßen Verwendung für das Coil-Coating-Verfahren werden sie vorzugsweise in einer Menge von 5 bis 40 Gew.-%, bevorzugt 5 bis 35 Gew.-%, besonders bevorzugt 5 bis 30 Gew.-% und insbesondere 5 bis 25 Gew.-%, jeweils bezogen auf die Gesamtmenge des Beschichtungsstoffs, angewandt.

Der Beschichtungsstoff für das Coil-Coating-Verfahren enthält mindestens ein Pasten-PVC und mindestens ein Extender-PVC, wie eingangs definiert.

Der Gehalt des Beschichtungsstoffs an Pasten-PVC kann breit variieren und richtet sich nach den Erfordernissen des Einzelfalles. Vorzugsweise enthält der Beschichtungsstoff 10 bis 60 Gew.-%, bevorzugt 15 bis 55 Gew.-% und insbesondere 15 bis 50 Gew.-%, jeweils bezogen auf die Gesamtmenge des Beschichtungsstoffs, an Pasten-PVC. Vorzugsweise enthält der Beschichtungsstoff 10 bis 55 Gew.-%, bevorzugt 15 bis 50 Gew.-% und insbesondere 15 bis 45 Gew.-%, jeweils bezogen auf die Gesamtmenge des Beschichtungsstoffs an Extender-PVC.

Darüber hinaus kann der Beschichtungsstoff noch mindestens ein Additiv, ausgewählt aus der Gruppe, bestehend aus Stabilisatoren, Gleitmitteln, Füllstoffen, Pigmenten, Flamminhibitoren, Lichtstabilisatoren, Treibmitteln, polymeren Verarbeitungshilfsmitteln, Schlagzähverbesserern, optischen Aufhellern, Antistatika, Biostabilisatoren und von PVC verschiedenen Kunststoffen, enthalten. Insbesondere werden Additive eingesetzt, wie sie üblicherweise für PVC-haltige Materialien verwendet werden.

Beispiele besonders gut geeigneter PVC-Additive und die Mengen, in denen sie verwendet werden, sind aus der internationalen Patentanmeldung WO 03/029339 A1, Seite 22, Zeile 22, bis Seite 24, Zeile 21, oder in der deutschen Patentanmeldung DE 101 16 812 A1, Seite 15, Absatz [0036], bis Seite 16, Absatz [0056], bekannt.

Die Herstellung der Beschichtungsstoffe bietet keine methodischen Besonderheiten, sondern es können die üblichen und bekannten Verfahren und Vorrichtungen zur Herstellung von Gemischen aus PVC und Weichmachern verwendet werden.

Aufgrund der erfindungsgemäßen Verwendung können die Bandgeschwindigkeiten bei dem erfindungsgemäßen Verfahren gegenüber den Bandgeschwindigkeiten bei Coil-Coating-Verfahren des Standes der Technik signifikant erhöht werden, so dass die Wirtschaftlichkeit des erfindungsgemäßen Verfahrens diejenige der Coil-Coating-Verfahren des Standes der Technik übertrifft.

Die hier offenbarten Coils und die hierauf befindlichen Beschichtungen gleichen in ihren mechanischen, chemischen und physikalischen Eigenschaften, insbesondere in ihren kälteelastischen Eigenschaften, ihrer Thermostabilität und ihrer Haftung zu den Coils bzw. zu den hierauf befindlichen Grundierungen, zumindest den unter Verwendung von Phthalsäurediestern hergestellten Beschichtungen und Coils und können diese in der Kälteflexibilität sogar übertreffen. Dabei weisen die Coils, bzw. deren Beschichtungen auch noch eine bessere Witterungsbeständigkeit, insbesondere UV-Beständigkeit, auf als die unter Verwendung von Phthalsäurediestern hergestellten beschichteten Coils bzw. deren Beschichtungen.

Darüber hinaus lassen sich die hier beschriebenen Coils besonders leicht verarbeiten, insbesondere auch bei tiefen Temperaturen leicht formen, ohne dass Risse oder Delamination auftreten, so dass die Herstellung besonders stark geformter und komplex strukturierter Formteile möglich ist.

Die betreffenden Formteile eignen sich hervorragend für vielfältige Verwendungen im Innen- und Außenbereich, wie beispielsweise im Automobilbau für die Herstellung von Karosserieteilen und Karosserien, Nutzfahrzeugaufbauten und Verkleidungen von Caravans; im Hausgerätebereich, beispielsweise für die Herstellung von Waschmaschinen, Geschirrspülmaschinen, Trocknern, Kühlschränken, Gefrierschränken oder Herden; im Leuchtenbereich für die Herstellung von Leuchten für den Innen- und Außenbereich oder im Baubereich im Innen- und Außenbereich, beispielsweise für die Herstellung von Decken- und Wandelementen, Türen, Toren Rohrisolierungen, Rollläden oder Fensterprofilen.

### Beispiele und Vergleichsversuche

### Beispiele 1 bis 4 und Vergleichsversuche V1 bis V4

### Die Herstellung von Beschichtungsstoffen für das Coil-Coating-Verfahren unter Verwendung von 1,2-Cyclohexandicarbonsäurediisononylester (DINCH) (Beispiele 1 bis 4) und ohne die Verwendung von DINCH (Vergleichsversuche V1 bis V4)

Die Beschichtungsstoffe der Beispiele 1 bis 4 und der Vergleichsversuche V1 bis V4 wurden durch Vermischen der in der Tabelle 1 angegebenen Bestandteile in den angegebenen Mengen und Homogenisieren der resultierenden Mischungen hergestellt.

**Tabelle 1: Zusammensetzung der Beschichtungsstoffe der Beispiele 1 bis 4 und der Vergleichsversuche V1 und V4 in Gew.-%, bezogen auf die Gesamtmenge eines Beschichtungsstoffs**

| **Bestandteil** | **Beispiele (Gew.-%):** | | | | **Vergleichsversuche (Gew.-%)** | | | |
|---|---|---|---|---|---|---|---|---|
| | **1** | **2** | **3** | **4** | **V1** | **V2** | **V3** | **V4** |
| **PVC:** | | | | | | | | |
| Pasten-PVC | 32,9 | 30,4 | 33,3 | 29,5 | 32,1 | 39,2 | 40,7 | 30 |
| Extender-PVC | 26,9 | 24,9 | 27,2 | 27,2 | 26,2 | 16,8 | 17,4 | 27,7 |
| | | | | | | | | |
| **Weichmacher:** | | | | | | | | |
| DIDP^{a)} | - | - | - | - | 20,5 | 15,7 | 16,3 | - |
| DINA^{b)} | 3,8 | 3,6 | 3,9 | 4,5 | 2,8 | 4,5 | 4,7 | 5,2 |
| TXIB^{c)} | 3,8 | 3,6 | 3,9 | 7,9 | 2,8 | 4,5 | 4,7 | 10,4 |
| DINCH | 16,7 | 15,5 | 16,9 | 14,7 | - | - | - | - |
| Polymeres Adipat | - | - | - | - | - | - | - | 2,3 |
| Mesamoll®^{d)} | - | - | - | - | - | - | - | 6,9 |
| | | | | | | | | |
| **Stabilisatoren:** | | | | | | | | |
| Epoxycostabilisator | 1,2 | 1,1 | 1,2 | 1,7 | 1,2 | 1,1 | 1,7 | 1,7 |
| Sn-Hitzestabilisator | - | - | - | - | 0,9 | 0,8 | 0,9 | - |
| Ba-Zn-Hitzestabilisator | 1,5 | 1,4 | 1,5 | - | - | - | - | - |
| Ca-Zn-Hitzestabilisator | - | - | - | 1,7 | - | - | - | 1,7 |
| UV-Stabilisator | - | - | - | 0,2 | - | - | - | 0,2 |
| | | | | | | | | |
| **Flamminhibitoren:** | | | | | | | | |
| Antimontrioxid | - | - | - | 2,3 | 0,9 | 1,7 | 2,3 | 2,3 |
| Bariummetaborat | 1,6 | 1,5 | 1,6 | - | 0,9 | 0,8 | 1,6 | - |
| | | | | | | | | |
| **Lösemittel:** | | | | | | | | |
| dearomatisiertes | | | | | | | | |
| Benzin | 2,6 | 4,6 | 3,2 | - | 2,3 | 2,0 | 2,6 | - |
| Butylglykoldiacetat | 1,3 | 2,3 | 2,2 | 5,7 | 2,0 | 1,7 | 2,3 | 6,9 |
| | | | | | | | | |
| **Pigmente:** | | | | | | | | |
| Titandioxid | 7,4 | 11,1 | - | - | 7,2 | 11,2 | - | - |
| Russ | (0,02) | - | 0,2 | - | (0,02) | - | 0,2 | - |
| anorganisches | | | | | | | | |
| Gelbpigment | 0,3 | - | 0,2 | - | 0,3 | - | 3,6 | - |
| organisches | | | | | | | | |
| Braunpigment | - | - | 0,9 | - | - | - | 0,9 | - |
| Aluminiumpigment | - | - | - | 4,5 | - | - | - | 4,6 |

| | | | | | | | | |
|---|---|---|---|---|---|---|---|---|
| a) Diisodecylphthalat; b) Diisononyladipat; c) 1-Isopropyl-2,2-dimethyltrimethylendiisobutyrat (Texanol®-diisobutyrat); d) Weichmacher der Firma Lanxess; | | | | | | | | |

Die Beschichtungsstoffe können in der folgenden Weise direkt miteinander verglichen werden:

| **Beispiel** | **Vergleichsversuch** |
|---|---|
| 1 | V1 |
| 2 | V2 |
| 3 | V3 |
| 4 | V4 |

Die Beschichtungsstoffe 1 bis 4 und die Beschichtungsstoffe V1 bis V4 waren hervorragend für das Coil-Coating-Verfahren geeignet.

### Beispiele 5 bis 8 und Vergleichsversuche V5 bis V8

### Die Herstellung von beschichteten Coils mit DINCH-haltigen Beschichtungen (Beispiele 5 bis 8) und von beschichteten Coils mit DINCH-freien Beschichtungen (Vergleichsversuche V5 bis V8) mit Hilfe des Coil-Coating-Verfahrens

Die Beschichtungsstoffe der Beispiele 1 bis 4 und der Vergleichsversuche V5 bis V8 wurden in der folgenden Weise für die Herstellung der beschichteten Coils der Beispiele 5 bis 8 und der Vergleichsversuche V5 bis V8 verwendet:

| **Beschichtungsstoff: Beispiel oder Vergleichsversuch** | **beschichteter Coil: Beispiel oder Vergleichsversuch** |
|---|---|
| 1 | 5 |
| 2 | 6 |
| 3 | 7 |
| 4 | 8 |
| V1 | V5 |
| V2 | V6 |
| V3 | V7 |
| V4 | V8 |

Die Beschichtungsstoffe wurden auf Coils aus HDG (hot dipped galvalume)-Stahl, die mit einer 3 bis 5 µm dicken Polyacrylat-Grundierung versehen waren, appliziert und bei einer PMT von 205 bis 215°C gehärtet oder geliert. Es resultierten beschichtete Coils mit Decklackierungen einer Schichtdicke von 200 µm.

Es zeigte sich, dass bei Verwendung der DINCH-haltigen Beschichtungsstoffe der Beispiele 1 bis 4 die Bandgeschwindigkeiten signifikant gegenüber den Bandgeschwindigkeiten bei der Verwendung der DINCH-freien Beschichtungsstoffe der Vergleichsversuche V1 bis V4 erhöht werden konnten. Es ergab sich folgende Reihenfolge der Bandgeschwindigkeiten:
Beschichtungsstoff V4 (Mesamoll®-haltig) < Beschichtungsstoffe V1 bis V3 (DIDP-haltig) < Beschichtungsstoffe 1 bis 4 (DINCH-haltig),
wobei die Bandgeschwindigkeiten innerhalb der Reihe jeweils um 20 m/min erhöht werden konnten. Die Herstellung der beschichteten Coils der Beispiele 5 bis 8 war daher erheblich wirtschaftlicher als die Herstellung der beschichteten Coils der Vergleichsversuche V5 bis V8.

Überraschenderweise waren die beschichteten Coils der Beispiele 5 bis 8 den beschichteten Coils der Vergleichsversuche V5 bis V7 in der Kälteflexibilität eindeutig überlegen. Dies wurde anhand des Tieftemperatur-T-Bend-Tests untermauert. Dazu wurde aus einem zu untersuchenden beschichteten Coil ein Probestreifen der Abmessung 10,16 cm x 5,08 cm (4" x 2") geschnitten. Der Probestreifen wurde per Hand um 180° um einen Dorn eines Durchmessers von 6 bis 7 mm gebogen, so dass eine 5,08 cm breite gebogene Oberfläche resultierte. Der gebogene Probestreifen wurde mit einem Thermoelement verbunden und zusammen mit einer Haltevorrichtung in Trockeneis eingetaucht, bis eine Temperatur von -60°C erreicht war. Die gesamte Anordnung wurde danach entnommen und aufgewärmt, bis die gewünschte Testtemperatur erreicht war. Danach wurde der Probestreifen sofort in einem Schraubstock während 1 bis 5 s flach gepresst, so dass der kleinste mögliche Biegeradius resultierte. Die resultierende gefaltete Kante wurde sofort nach der Biegung unter zehnfacher Vergrößerung begutachtet. Traten bei dem kleinsten möglichen Biegeradius keine Risse auf, wurde dies mit T 0 benotet (vgl. hierzu auch DIN EN 13523-7:2001 und A. Goldschmidt und H.-J. Streitberger, BASF-Handbuch Lackiertechnik, Vincentz Verlag, Hannover, 2002, Seite 754).

Die Ergebnisse finden sich in der Tabelle 2. Es wird jeweils angegeben, ob starke Risse (Note ++), nur leichte Risse (Note +) oder keine Risse (Note T 0) auftraten.

**Tabelle 2: Die Ergebnisse der Tieftemperatur-T-Bend-Tests**

| **Beispiele und** | **Testtemperatur:** | | | | |
|---|---|---|---|---|---|
| **Vgl.vers.** | **10°C** | **5°C** | **0°C** | **-5°C** | **-10°C** |
| 5 bis 8 | T0 | T0 | T0 | + | ++ |
| V5 bis V7 | T0 | T0 | ++ | ++ | ++ |

Außerdem waren die beschichteten Coils der Beispiele 5 und 8 den beschichteten Coils der Vergleichsversuche V5 und V8 in der Witterungsbeständigkeit eindeutig überlegen, was anhand des UV-B-Tests nach ASTM G53-88 (Lampe: Wellenlänge 313 nm; Zyklus: 8 Stunden Belichtung bei 60°C; 4 Stunden Kondenswasserbelastung bei 50°C):
Während die Beschichtung des beschichteten Coils V5 bereits nach einer Belichtungsdauer von 2000 Stunden vollständig delaminiert war (Note 3), war die Beschichtung des beschichteten Coils 5 nach 2000 Stunden nicht (Note 0) und selbst nach 3000 Stunden nur geringfügig delaminiert (Note 1).

Während die Beschichtung des beschichteten Coils V8 bereits nach 1000 Stunden vollständig delaminiert war (Note 3), war die Beschichtung des beschichteten Coils 8 nach dieser Zeit nur wenig delaminiert (Note 2).

Ansonsten wiesen alle beschichteten Coils der Beispiele 5 bis 8 und der Vergleichsversuche V5 bis V8 dieselben hervorragenden anwendungstechnischen Eigenschaften, wie beispielsweise eine hervorragende Chemikalienbeständigkeit, auf.

## Patentansprüche

1. Coil-Coating-Verfahren, bei dem man einen fließfähigen Beschichtungsstoff, kontinuierlich einseitig oder zweiseitig auf ein Coil appliziert und die applizierten Schicht(en) thermisch nachbehandelt, **dadurch gekennzeichnet, dass** ein Beschichtungsstoff,
enthaltend 1,2-Cyclohexandicarbonsäurediisononylester, ein Pasten-PVC eines mittleren Korndurchmessers von 1 bis 15 µm und ein Extender-PVC eines mittleren Korndurchmessers von 25 bis 35 µm und mindestens ein Additiv, ausgewählt aus der Gruppe, bestehend aus Stabilisatoren, Gleitmitteln, Füllstoffen, Pigmenten, Flamminhibitoren, Lichtstabilisatoren, Treibmitteln, polymeren Verarbeitungshilfsmitteln, Schlagzähverbesserern, optischen Aufhellern, Antistatika, Biostabilisatoren und von PVC verschiedenen Kunststoffen verwendet wird.

2. Coil Coating Verfahren nach Anspruch 1, **dadurch gekennzeichnet, dass** sich die Isononylreste von Isononanolen mit einem Isoindex, berechnet aus dem Verzweigungsgrad der im Isononanol enthaltenen C9-Alkoholen und ihrer jeweiligen gaschromatographisch gemessenen Menge, von 0,1 bis 4 ableiten.

3. Coil-Coating-Verfahren nach einem der Ansprüche 1 oder 2, **dadurch gekennzeichnet, dass** das Coil einseitig oder zweiseitig vorbehandelt worden ist.

4. Coil-Coating-Verfahren nach einem der Ansprüche 1 bis 3, **dadurch gekennzeichnet, dass** eine der applizierten Schichten nach ihrer thermischen Nachbehandlung als Decklackierung dient.

5. Coil-Coating-Verfahren nach Anspruch 4, **dadurch gekennzeichnet, dass** die Decklackierung eine Trockenschichtdicke von 50 bis 350 µm hat.

## Claims

1. A coil coating process in which a flowable coating material is applied continuously, unilaterally or bilaterally, to a coil and the applied layer or layers is or are subjected to thermal aftertreatment, wherein a coating material is used which comprises 1,2-cyclohexanedicarboxylic acid diisononyl ester, a paste PVC with an average particle diameter of 1 to 15 µm and an extender PVC with an average particle diameter of 25 to 35 µm and at least one additive selected from the group consisting of stabilizers, lubricants, fillers, pigments, flame retardants, light stabilizers, blowing agents, polymer processing assistants, impact modifiers, optical brighteners, antistats, biostabilizers and plastics other than PVC.

2. The coil coating process according to claim 1, wherein the isononyl radicals derive from isononanols having an iso index, calculated from the degree of branching of the C9 alcohols present in the isononanol and from their respective quantity as measured by gas chromatography, of 0.1 to 4.

3. The coil coating process according to either of claims 1 and 2, wherein the coil has been unilaterally or bilaterally pretreated.

4. The coil coating process according to any of claims 1 to 3, wherein one of the applied layers after its thermal aftertreatment serves as topcoat.

5. The coil coating process according to claim 4, wherein the topcoat has a dry film thickness of 50 to 350 µm.

## Revendications

1. Procédé de revêtement de bobines, selon lequel un matériau de revêtement fluide est appliqué en continu sur un côté ou sur les deux côtés d'une bobine, et la ou les couches appliquées sont post-traitées thermiquement, **caractérisé en ce qu'**un matériau de revêtement contenant de l'ester diisononylique de l'acide 1,2-cyclohexanedicarboxylique, un PVC en pâte d'un diamètre de particule moyen de 1 à 15 µm et un PVC extendeur d'un diamètre de particule moyen de 25 à 35 µm, et au moins un additif, choisi dans le groupe constitué par les stabilisateurs, les lubrifiants, les charges, les pigments, les inhibiteurs de flamme, les photostabilisateurs, les agents gonflants, les adjuvants d'usinage polymères, les agents d'amélioration de la résistance aux chocs, les azurants optiques, les antistatiques, les biostabilisateurs et les plastiques différents du PVC, est utilisé.

2. Procédé de revêtement de bobines selon la revendication 1, **caractérisé en ce que** les radicaux isononyle dérivent d'isononanols ayant un indice iso, calculé à partir du degré de ramification des alcools en C9 contenus dans l'isononanol et de leur quantité respective mesurée par chromatographie gazeuse, de 0,1 à 4.

3. Procédé de revêtement de bobines selon l'une quelconque des revendications 1 ou 2, **caractérisé en ce que** la bobine a été prétraitée d'un côté ou des deux côtés.

4. Procédé de revêtement de bobines selon l'une quelconque des revendications 1 à 3, **caractérisé en ce qu'**une des couches appliquées sert de laquage de couverture après son post-traitement thermique.

5. Procédé de revêtement de bobines selon la revendication 4, **caractérisé en ce que** le laquage de couverture a une épaisseur de couche sèche de 50 à 350 µm.
